# EUROPEAN PATENT APPLICATION

(11) **EP 3 089 252 A1**
(43) Date of publication of application: **02.11.2016**
(21) Application number: 14875210.8
(22) Date of filing: 04.12.2014
(51) Int. Cl.: H01M 8/02, H01M 8/12

(54) **SEPARATOR FOR SOLID ELECTROLYTE FUEL CELLS, AND SOLID ELECTROLYTE FUEL CELL**

(30) Priority: 27.12.2013 JP 2013273375
(71) Applicant: Murata Manufacturing Co., Ltd., Nagaokakyo-shi, Kyoto 617-8555 (JP)
(72) Inventor: TAKATA, Kazuhide, Nagaokakyo-shi Kyoto 617-8555 (JP)
(74) Representative: Reeve, Nicholas Edward
(86) International application number: PCT/JP2014/082116
(87) International publication number: WO 2015/098453

(57) **Abstract**

Provided is a separator for solid electrolyte fuel cell, and a solid electrolyte fuel cell, which can be prevented from being degraded even under an environment in the presence of water, and has stable strength and excellent durability. A separator 10 for solid electrolyte fuel cell according to the present invention includes: a separator main body including partially stabilized zirconia; and a protective layer formed on a surface of the body, the protective layer includes a material that undergoes no phase transition in a temperature range of 100°C to 300°C, or a material that has a thermal expansion coefficient different from a thermal expansion coefficient of the separator main body within ±1.5 ppm/K or less, and the material of the protective layer is not altered by water vapor.

## Description

### TECHNICAL FIELD

The invention relates to a separator for solid electrolyte fuel cell, and a solid electrolyte fuel cell including the separator, and more particularly, to a separator for solid electrolyte fuel cell, and a solid electrolyte fuel cell including the separator, which are unlikely to undergo time degradation.

### BACKGROUND ART

Flat-plate solid electrolyte fuel cells (also referred to as solid oxide fuel cells (SOFCs)) are each composed of a plurality of plate-like cells as power generation elements, which each include an anode (negative electrode), a solid electrolyte, and a cathode (positive electrode), and separators disposed between the plurality of cells. The separators are disposed between the plurality of cells in order to separate a fuel gas such as hydrogen supplied to the respective anodes of the multiple cells and an oxidant gas such as air supplied to the cathodes thereof. The use of, as the separators, partially stabilized zirconia such as yttria stabilized zirconia is disclosed (see Patent Document 1, for example). Pure zirconia causes a larger volumetric change due to a phase transition, thus leading to breakage in obtaining a sintered compact. For this reason, zirconia is used which is partially stabilized with the addition of a stabilizer.

However, the thus partially stabilized zirconia sintered compact has strength which undergoes substantial time degradation due to a phase transition of a sintered compact surface layer to monoclinic crystals in a specified temperature range of 100°C to 300°C, and in the case of use in the temperature range, the sintered compact surface may have a large number of fine cracks generated, and exhibit a water-absorbing property. As a result, the strength may be decreased, thereby finally leading to breakage. Therefore, for the purpose of providing a zirconia sintered compact which is less likely to undergo a phase transition with stable strength even under an environment in the presence of water, it has been proposed that partially stabilized zirconia further contains therein predetermined amounts of Al₂O₃ and TiO₂ (see Patent Document 2, for example).

### PRIOR ART DOCUMENTS

### PATENT DOCUMENTS

Patent Document 1: Japanese Patent No. 4472914
Patent Document 2: Japanese Patent Application Laid-Open No. 11-116328

### SUMMARY OF THE INVENTION

### Problem to be solved by the invention

However, even when the zirconia material is used as proposed in Patent Document 2, the problem mentioned above has been insufficiently solved. The present invention is intended to solve the problem mentioned above, and an object of the invention is to provide a separator for solid electrolyte fuel cell, and a solid electrolyte fuel cell, which can be prevented from being degraded even under an environment in the presence of water, and have stable strength and excellent durability.

### Means for solving the problem

In order to achieve the object mentioned above, the separator for solid electrolyte fuel cell includes: a separator main body including partially stabilized zirconia; and a protective layer formed on a surface of the body, and characteristically, the protective layer includes a material that undergoes no phase transition in a temperature range of 100°C to 300°C, or a material that has a thermal expansion coefficient different from a thermal expansion coefficient of the separator main body within ±1.5 ppm/K or less, and the material of the protective layer is not altered by water vapor.

In the separator for solid electrolyte fuel cell according to the present invention, the protective layer preferably includes at least one selected from the group consisting of stabilized zirconia, ceria (CeO₂), ceria doped with a rare earth or yttrium, as well as an insulating ceramic including a composite oxide of a material selected from the group consisting of alumina, magnesia, and strontium titanate.

Alternatively, the protective layer preferably includes at least one selected from the group consisting of: lanthanum gallate doped with at least one selected from the group consisting of magnesium, cobalt, and iron, and with an alkaline-earth metal; strontium titanate doped with at least one selected from the group consisting of niobium and tantalum, and with a rare-earth element; lanthanum ferrate; lanthanum ferrate partially substituted with aluminum; and an insulating ceramic including a composite oxide of at least one selected from the group consisting of the four types of materials and at least one selected from the group consisting of alumina, magnesia, and strontium titanate.

In the separator for solid electrolyte fuel cell according to the present invention, the separator main body and the protective layer are preferably co-sintered integrally.

Furthermore, the solid electrolyte fuel cell according to the present invention is a solid electrolyte fuel cell including the separators for solid electrolyte fuel cell according to the present invention, and characteristically, the solid electrolyte fuel cell is integrated by applying co-sintering to constituent members, and the protective layer is formed on a surface of the separator main body by the co-sintering.

The protective layer is preferably at least formed on a principal surface of the separator main body to serve as the outer wall surface of the solid electrolyte fuel cell. Advantageous effect of the invention

According to the present invention, a separator for solid electrolyte fuel cell, and a solid electrolyte fuel cell can be provided which can be prevented from being degraded even under an environment in the presence of water, and have stable strength and excellent durability.

The foregoing object, other objects, features, and advantages of the invention will be further evident from the following detailed description of examples taken with reference to the drawing.

### BRIEF EXPLANATION OF DRAWING

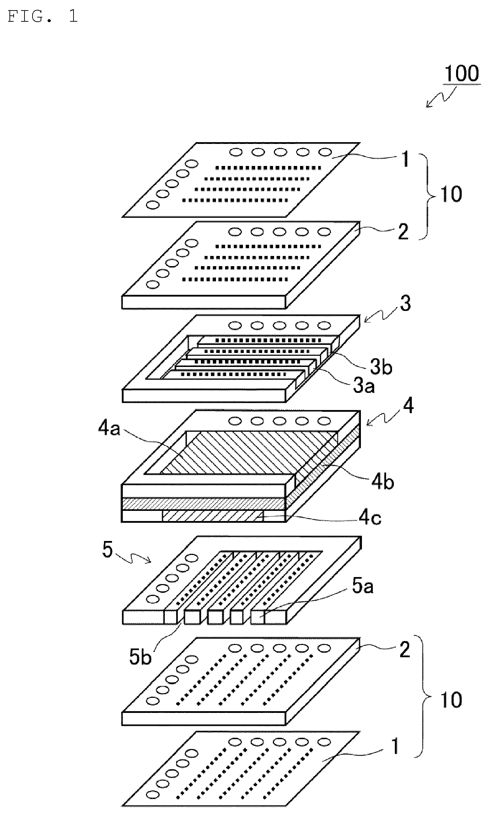

FIG. 1 is an exploded perspective view illustrating, for a solid electrolyte fuel cell including a separator for solid electrolyte fuel cell according to an embodiment of the present invention, stacked members constituting the cell.

### MODE FOR CARRYING OUT THE INVENTION

Hereinafter, an embodiment of the invention will be described with reference to the drawing. However the present invention is not limited or restricted to the following example.

FIG. 1 is an exploded perspective view illustrating, for a solid electrolyte fuel cell 100 according to an embodiment of the present invention, stacked members (1 to 5) constituting the cell 100. A separator 10 for solid electrolyte fuel cell according to the present invention includes a separator main body 2, and a protective layer 1 formed on the surface thereof.

The separator for solid electrolyte fuel cell according to the present invention includes the separator main body 2 composed of partially stabilized zirconia, and the protective layer 1 formed on the surface thereof. The protective layer 1 is formed from a material that undergoes no phase transition in a temperature range of 100°C to 300°C, or a material that has a thermal expansion coefficient different from the thermal expansion coefficient of the separator main body within ±1.5 ppm/K or less. Furthermore, the material of the protective layer 1 is not altered by water vapor.

Zirconia is a material expected to be applied as a structural material, in particular, a high-temperature material or a heat-resistance material, because of its high melting point, good high-temperature strength, high toughness, and moreover, low thermal conductivity among ceramic materials. In the present invention, partially stabilized zirconia (PSZ) which can suppress a volumetric change due to a phase transition is used as a material for the separator main body for use in the solid electrolyte fuel cell. For example, zirconia with 3 mol% of yttria (Y₂O₃) added thereto (3Y-PSZ) can be used as the partially stabilized zirconia. Other examples thereof include tetragonal zirconia as a main constituent with magnesia, calcia, scandia, ceria, yttria, yttria and niobium oxide, yttria and tantalum oxide, and rare earths excluding lanthanum, added thereto.

Partially stabilized zirconia sintered compacts are, as described previously, are likely to undergo a phase transition to monoclinic crystals in a temperature range of 100°C to 300°C, and likely to generate fine cracks at the surfaces of the sintered compacts. In this situation where cracks are generated, in the presence of moisture such as water vapor, there is a possibility that the ingress of moisture into the cracks will accelerate the phase transition, thereby leading to strength degradation or breakage. Therefore, the protective layer 1 formed from a material that undergoes no phase transition in a temperature range of 100°C to 300°C, and undergoes no alteration by water vapor is provided on the surface of the separator main body 2 composed of the partially stabilized zirconia. When the protective layer 1 is a material that undergoes no phase transition, there is a small volume change with temperature change. In addition, the protective layer 1 has favorable resistance to water vapor. Accordingly, moisture is unlikely to reach the surface of the separator main body 2, even under an environment in the presence of water. Therefore, even under an environment in the presence of water, the surface of the partially stabilized zirconia sintered compact can be prevented from being degraded, and the separator 10 for solid electrolyte fuel cell can be achieved which has excellent durability.

Alternatively, a similar effect can be achieved also in the case of providing the protective layer 1 formed from a material that has a thermal expansion coefficient different from the thermal expansion coefficient of the separator main body 2 within ±1.5 ppm/K or less, and undergoes no alteration by water vapor. When the thermal expansion coefficient of the protective layer 1 is close in value to the thermal expansion coefficient of the separator main body 2, the protective layer 1 is less likely to be peeled even by the thermal cycle during the use of the fuel cell.

Examples of the material that undergoes no phase transition in a temperature range of 100°C to 300°C, and undergoes no alteration by water vapor include an insulating ceramic composed of stabilized zirconia such as scandia stabilized zirconia, yttria stabilized zirconia, calcia stabilized zirconia, and ceria stabilized zirconia, ceria (CeO₂), ceria doped with a rare earth or yttrium, and composite oxides of a material selected from the group consisting of alumina such as MgO-MgAl₂O₄ and Al₂O₃-SrTiO₃, magnesia, and strontium titanate. The protective layer 1 is preferably composed of at least one selected from the group consisting of the materials mentioned above.

Examples of the material that has a thermal expansion coefficient different from the thermal expansion coefficient of the separator main body 2 within ±1.5 ppm/K or less, and undergoes no alteration by water vapor include the following materials PL1 to PL8. The protective layer 1 is preferably composed of at least one selected from the group consisting of the following materials PL1 to PL8.
PL1. Lanthanum gallate doped with at least one selected from the group consisting of magnesium, cobalt, and iron, and with an alkaline-earth metal (Chemical Formula (1)). The alkaline-earth metal is preferably at least one selected from the group consisting of Ca, Sr, and Ba.
   (La,A)(Ga,B)O₃ (A = alkaline-earth metal, B = Mg, Co, Fe) (1)
PL2. Strontium titanate doped with at least one selected from the group consisting of niobium and tantalum, and with a rare-earth element (Chemical Formula (2))
   (Sr,C)(Ti,D)O₃ (C = rare-earth element, D = Nb, Ta) (2)
PL3. Titanium oxide (Chemical Formula (3))
   (E, F) (Ti,G)O₃ (E = Mg, Ca, Ba, F = Y, a rare-earth element, G = Nb, Ta) (3)
PL4. Lanthanum ferrate
PL5. LaHO₃ (H = a single or solid solution system of Al, Fe, or Ga)
PL6. Mixture of strontium titanate and alumina SrTiO₃-Al₂O₃
PL7. Strontium zirconate SrZrO₃
PL8. Insulating ceramic composed of a composite oxide of at least one selected from the group consisting of the previously mentioned materials PL1 to PL7 and at least one selected from the group consisting of alumina, magnesia, and strontium titanate

Among the materials mentioned above, the materials that form stable interfaces even in the case of baking to partially stabilized zirconia are particularly preferred as the protective layer 1. For example, stabilized zirconia which is the same zirconia as the separator main body 2, ceria for use in barrier layers of solid electrolyte fuel cells, and the like are particularly preferred. It is to be noted that according to the present invention, the protective layer 1 coats the surface of the separator main body 2 as a molded article, rather than coating the partially stabilized zirconia constituting the separator main body 2 on a particle level.

It is important for the "material that undergoes no alteration by water vapor" mentioned previously, specifically, to meet conditions such as insolubility in water, no crack generated by water vapor, and water resistance. In addition, the protective layer 1 or the surface of the protective layer 1 is preferably dense to prevent water vapor permeation, and preferably has a relative density of 92% or more, for example. As long as the protective layer 1 is dense, water vapor permeation can be prevented even the layer is small in thickness, and thus, when the protective layer 1 can be formed to be denser, it is also possible to further reduce the thickness of the protective layer 1.

The thickness of the protective layer 1 is preferably smaller, as long as the separator main body 2 is not affected by water vapor. This is because the protective layer 1 is made less likely to be peeled from the separator main body 2 even by the thermal cycle during the use of the fuel cell, when the layer is small in thickness. For example, when the protective layer 1 is CeO₂ which has a large difference in thermal expansion coefficient, the thickness preferably falls within the range of 1 µm to 30 µm, more preferably within the range of 1 µm to 10 µm. Alternatively, when the protective layer 1 is 10YSZ which has a small difference in thermal expansion coefficient, the thickness preferably falls within the range of 1 µm to 100 µm, more preferably within the range of 1 µm to 30 µm. It is to be noted that when the protective layer 1 is small in thickness, a material which has a larger difference in thermal expansion coefficient can be also used, as compared with when the protective layer 1 is large in thickness.

The separator 10 for solid electrolyte fuel cell can be obtained by applying co-sintering integrally to the separator main body 2 and the protective layer 1. Specifically, a green sheet for forming the protective layer 1 may be stacked onto a green sheet for forming the separator main body 2, and subjected to firing, or a paste prepared by mixing a material powder for the protective layer 1, an organic solvent, and a varnish may be applied onto a green sheet for forming the separator main body 2, and subjected to firing. Alternatively, onto the separator main body 2 of a partially stabilized zirconia plate prepared by firing or the like a green sheet in advance, it is also possible to stack a green sheet for forming the protective layer 1, or apply a paste prepared by mixing a material powder for the protective layer 1, an organic solvent, and a varnish, and apply firing to the body with the green sheet stacked or the paste applied.

The solid electrolyte fuel cell 100 includes, for example, the separator 10 for solid electrolyte fuel cell, a cathode-side rib/air flow channel member 3, a power generation layer 4, and an anode-side rib/fuel flow channel member 5. The cathode-side rib/air flow channel member 3 includes a cathode-side rib material 3a and an air flow channel 3b. The power generation layer 4 includes a cathode 4a, an electrolyte layer 4b, and an anode 4c. The anode-side rib/fuel flow channel member 5 includes an anode-side rib material 5a and a fuel flow channel 5b.

The solid electrolyte fuel cell 100 has constituent members thereof integrated by co-sintering, and the protective layer 1 formed by the co-sintering on the surface of the separator main body 2.

The protective layer 1 is preferably at least formed on the principal surface of the separator main body 2 to serve as the outer wall surface of the solid electrolyte fuel cell 100. The fuel discharged from the solid electrolyte fuel cell 100 burns at the top or bottom of the solid electrolyte fuel cell 100, and the protective layer 1 is thus preferably provided at the top or bottom of the solid electrolyte fuel cell 100, or both. The protective layer 1 is preferably also formed on side surfaces of the separator main body 2, but the formation is not essential. This is because the whole cell is much less affected laterally by water vapor or the like, even if any, due to the fact that the separator main body 2 is typically around 300 µm in thickness so that the side surface area of the separator main body 2 is microscopic as compared with the power generation area (the area of the principal surface mentioned previously).

### Examples

### (Example 1)

Prepared was a separator main body composed of 3Y-PSZ (ZrO₂ with 3 mol of Y₂O₃ added thereto) as partially stabilized zirconia.

A paste with a material powder, an organic solvent, and a varnish mixed was prepared as a material for the formation of a protective layer. Ceria (CeO₂) was used for the material powder, and the mixing was carried out such that the respective volume fractions were material powder: 40 vol%, organic solvent: 33 vol%, and varnish: 27 vol%. The prepared paste was applied to the surface of the separator main body, and subjected to co-sintering to form a CeO₂ layer of 8 µm in thickness on the separator main body, thereby providing a separator including the protective layer.

### (Example 2)

A separator was prepared in the same way as in Example 1, except for, as a protective layer, the formation of a 20GDC layer of 8 µm in thickness by co-sintering on a separator main body with the use of a 20GDC (Ce_{0.8}Gd_{0.2}O₂) powder as a material powder.

### (Example 3)

A separator was prepared in the same way as in Example 1, except for, as a protective layer, the formation of a 10Sc1CeS2 layer of 8 µm in thickness by co-sintering on a separator main body with the use of a 10Sc1CeS2 (ZrO₂ with 10 mol% of Sc₂O₃ and 1 mol% of CeO₂ added thereto) powder as a material powder.

### (Example 4)

A separator was prepared in the same way as in Example 1, except for, as a protective layer, the formation of a 10YSZ layer of 8 µm in thickness by co-sintering on a separator main body with the use of a 10YSZ (ZrO₂ with 10 mol% of Y₂O₃ added thereto) powder as a material powder.

### (Example 5)

A separator was prepared in the same way as in Example 1, except for, as a protective layer, the formation of a 15CSZ layer of 8 µm in thickness by co-sintering on a separator main body with the use of a 15CSZ (ZrO₂ with 15 mol% of CaO added thereto) powder as a material powder.

### (Example 6)

A separator was prepared in the same way as in Example 1, except for, as a protective layer, the formation of a MgTiO₃ layer of 8 µm in thickness by co-sintering on a separator main body with the use of a MgTiO₃ powder as a material powder.

### (Example 7)

A separator was prepared in the same way as in Example 1, except for, as a protective layer, the formation of a SrTiO₃ layer of 8 µm in thickness by co-sintering on a separator main body with the use of a SrTiO₃ powder as a material powder.

### (Example 8)

A separator was prepared in the same way as in Example 1, except for, as a protective layer, the formation of a SrZrO₃ layer of 8 µm in thickness by co-sintering on a separator main body with the use of a SrZrO₃ powder as a material powder.

### (Example 9)

A separator was prepared in the same way as in Example 1, except for, as a protective layer, the formation of a LaAlO₃ layer of 8 µm in thickness by co-sintering on a separator main body with the use of a LaAlO₃ powder as a material powder.

### (Example 10)

A separator was prepared in the same way as in Example 1, except for, as a protective layer, the formation of a LaFeO₃ layer of 8 µm in thickness by co-sintering on a separator main body with the use of a LaFeO₃ powder as a material powder.

### (Comparative Example 1)

The separator main body used in Example 1 without any protective layer provided was regarded as a separator according to Comparative Example 1.

### (Comparative Example 2)

A separator was prepared in the same way as in Example 1, except for, as a protective layer, the formation of a MgO layer of 8 µm in thickness by co-sintering on a separator main body with the use of a magnesium oxide (MgO) powder as a material powder.

The obtained separators were exposed to a fuel burning atmosphere to confirm whether the surface of the 3Y-PSZ had undergone a phase transition or not. The surfaces and cross sections exposed to a hydrogen-burning atmosphere for 24 hours at 900°C, and then exposed to a water-vapor atmosphere for 10 hours at 300°C were subjected to crystal structure analysis by powder X-ray diffraction (XRD) and Raman spectroscopy. As a result of this analysis, the material with monoclinic zirconia found was regarded as "Yes" in "Phase Transition of Zirconia". Likewise, it was also confirmed whether the protective layers had undergone a phase transition or not.

Table 1 shows the coefficient of thermal expansion, the water-vapor stability of protective layer, and whether the surfaces of the protective layer and 3Y-PSZ (zirconia) subjected to the exposure to the fuel-burning atmosphere have undergone a phase transition or not, for the protective layers according to the respective examples and comparative examples. Favorable water-vapor stability is denoted by "G", whereas unfavorable water-vapor stability is denoted by "NG".

**[Table 1]**

| | Protective Layer Material | Coefficient of Thermal Expansion (1000°C) | Water Vapor Stability | Phase Transition of Protective Layer | Phase Transition of Zirconia | Evaluation |
|---|---|---|---|---|---|---|
| Example 1 | CeO₂ | 12.0 | G | No | No | G |
| Example 2 | 20GDC | 12.0 | G | No | No | G |
| Example 3 | 10Sc1CeS2 | 10.4 | G | No | No | G |
| Example 4 | 10YSZ | 10.4 | G | No | No | G |
| Example 5 | 15CSZ | 10.5 | G | No | No | G |
| Example 6 | MgTiO₃ | 10.3 | G | No | No | G |
| Example 7 | SrTiO₃ | 12.0 | G | No | No | G |
| Example 8 | SrZrO₃ | 10.5 | G | No | No | G |
| Example 9 | LaAlO₃ | 10.3 | G | No | No | G |
| Example 10 | LaFeO₃ | 10.8 | G | No | No | G |
| Comparative Example 1 | No | - | - | - | Yes | NG |
| Comparative Example 2 | MgO | 11.0 | NG | No | Yes | NG |

| | | | | | | |
|---|---|---|---|---|---|---|
| 20GDC = Ce_{0.8}Gd_{0.2}O₂ 10Sc1CeS2 = 10%Sc₂O₃-1%CeO₂-89%ZrO₂ 10YSZ = 10%Y₂O₃-90%ZrO₂ 15CSZ = 15%CaO-85%ZrO₂ | | | | | | |

In Examples 1 to 10 and Comparative Example 2 after the exposure to the fuel burning atmosphere, there was no phase transition found for each of the protective layers. However, in the case of the MgO according to Comparative Example 2, although there was no phase transition found for the protective layer, the 3Y-PSZ surface of the separator main body was protected insufficiently (Phase Transition of Zirconia "Yes") because of the solubility in water (Water Vapor Stability "NG").

In Examples 1 to 10, in each case, monoclinic zirconia was not observed, or there was no phase transition found at the surface of 3Y-PSZ (zirconia). This is believed to be because the surface of the separator main body 2 was able to be prevented from being degraded even in the case of exposure to the water-vapor atmosphere, due to the fact that the CeO₂, 20GDC, 10Sc1CeS2, 10YSZ, 15CSZ, MgTiO₃, SrTiO₃, SrZrO₃, LaAlO₃, and LaFeO₃ are close in property to the 3Y-PSZ and likely to be sintered, and thus able to form dense layers even by co-sintering.

### (Example 11)

Prepared as follows was the plate solid oxide fuel cell (SOFC) 100 of 65 mm² × 65 mm² in power generation area, provided with the separators 10 for solid electrolyte fuel cell, with the protective layers 1 provided on the surfaces of the separator main bodies 2 (see FIG. 1).

Green sheets were stacked in order as shown in FIG. 1, for forming the separator main body 2, the cathode-side rib/air flow channel member 3, the air electrode (cathode) 4a, the electrolyte layer 4b, and the fuel electrode (anode) 4c, the anode-side rib/fuel flow channel member 5, and the separator main body 2. As the protective layer 1, the paste according to Example 1 was applied onto the separator main body 2 in order to form a CeO₂ layer of 8 µm in thickness by co-sintering (batch firing for the whole cell including the separators). It is to be noted that the thicknesses of the respective green sheets and the thickness of the layer obtained by applying the paste according to Example 1 were set so as to reach predetermined thicknesses after the sintering.

This stack was subjected to pressure bonding by warm isostatic press for 2 minutes at a pressure of 1000 kgf/cm² and at a temperature of 80°C. This pressure-bonded body was subjected to a degreasing treatment within the temperature range of 400°C to 500°C, and then sintering by keeping the body at a temperature of 1300°C for 3 hours.

For the SOFC cell 100 according to the present example, the protective layer 1 was formed on the surfaces (principal surfaces) and side surfaces of the separator main bodies 2 at the top surface and bottom surfaces of the SOFC cell 100. In thickness after the sintering, the separator 2 is 300 µm, and the ribs (3a and 5a) are 300 µm. The ribs (3a and 5a) and flow channels (3b and 5b) of 0.8 mm in width were arranged alternately. The flow channel length is 61.5 mm. The power generation layer 4 including the air electrode (cathode) 4a, the electrolyte layer 4b, and the fuel electrode (anode) 4c is 200 µm in thickness after the firing. The separator main bodies 2 and the ribs (3a and 5a) have zirconia (3Y-PSZ) with 3 mol% of Y₂O₃ added thereto. The green sheets for the separator main bodies 2 and the ribs (3a and 5a) were prepared by a doctor blade method after mixing a material powder, a polyvinyl butyral based binder, and a mixture of ethanol and toluene (mixture ratio of 1 : 4 in ratio by weight) as an organic solvent such that the respective volume fractions of the material powder, binder, and organic solvent were respectively 18 vol%, 12 vol%, and 70 vol%.

It is to be noted that sheets prepared as described later with the use of the following material powders were used for the green sheets for forming the air electrode (cathode) 4a, the electrolyte layer 4b, and the fuel electrode (anode) 4c.

Air electrode (cathode) 4a: mixture of 60 weight% of La_{0.8}Sr_{0.2}MnO₃ and 40 weight% of zirconia (ZrO₂) stabilized with 10 mol% of scandia (Sc₂O₃) in additive amount and 1 mol% of ceria (CeO₂) in additive amount (scandia-ceria stabilized zirconia: ScCeSZ)

Electrolyte Layer 4b (solid electrolyte layer): zirconia (ZrO₂) stabilized with 10 mol% of scandia (Sc₂O₃) in additive amount and 1 mol% of ceria (CeO₂) in additive amount (scandia-ceria stabilized zirconia: ScCeSZ)

Fuel Electrode (anode) 4c: mixture of 60 weight% of nickel oxide (NiO) and 40 weight% of zirconia (ZrO₂) stabilized with 10 mol% of scandia (Sc₂O₃) in additive amount and 1 mol% of ceria (CeO₂) in additive amount (scandia-ceria stabilized zirconia: ScCeSZ)

Further, after the sintering, 20 to 40 parts by weight of a carbon powder and 20 to 40 parts by weight of a carbon powder were respectively added to 100 parts by weight of the material powder for the fuel electrode (anode) 4c and 100 parts by weight of the material powder for the air electrode (cathode) 4a such that pores required for gas diffusion were formed adequately. The fuel electrode (anode) and the air electrode (cathode) were formed to be 60 µm in thickness.

Each material powder, a polyvinyl butyral based binder, and a mixture of ethanol and toluene (mixture ratio of 1 : 4 in ratio by weight) as an organic solvent were mixed such that the respective volume fractions of the material powder, binder, and organic solvent were respectively 18 vol%, 12 vol%, and 70 vol%. After the mixing, green sheets were prepared by a doctor blade method.

### (Example 12)

A SOFC cell was prepared in the same way as in Example 11, except for, as a protective layer, the formation of a GDC (Ce_{0.8}Gd_{0.2}O₂) layer of 8 µm in thickness by co-sintering on a separator main body with the use of the paste according to Example 2.

### (Example 13)

A SOFC cell was prepared in the same way as in Example 11, except for, as a protective layer, the formation of a 10Sc1CeS2 (ZrO₂ with 10 mol% of Sc₂O₃ and 1 mol% of CeO₂ added thereto) layer of 8 µm in thickness by co-sintering on a separator main body with the use of the paste according to Example 3.

### (Example 14)

A SOFC cell was prepared in the same way as in Example 11, except for, as a protective layer, the formation of a 10YSZ layer of 8 µm in thickness by co-sintering on a separator main body with the use of the paste according to Example 4.

The SOFC cells 100 prepared according to Examples 11 to 14 were exposed to a fuel burning atmosphere at 900°C for 24 hours, and the separator surfaces were then analyzed to confirm there was no phase transition. Furthermore, when a thermal cycle was carried out 100 times while regarding, as one cycle, a step of increasing from room temperature up to 1000°C at 5°C/min, and then decreasing down to room temperature at -5°C/min, peeling of the protective layer 1 or degradation of the separator was not found in each case. As just described, it is determined that according to Examples 11 to 14, a separator for solid electrolyte fuel cell, and a solid electrolyte fuel cell have been achieved successfully, which can be prevented from being degraded even under an environment in the presence of water, and have stable strength and excellent durability.

### DESCRIPTION OF REFERENCE SYMBOLS

- 1:: protective layer
- 2:: separator main body
- 3:: cathode-side rib/air flow channel member
- 3a:: cathode side
- 3b:: rib material air flow channel
- 4:: power generation layer
- 4a:: cathode
- 4b:: electrolyte layer
- 4c:: anode
- 5:: anode-side rib/fuel flow channel member
- 5a:: anode-side rib material
- 5b:: fuel flow channel
- 10:: separator for solid electrolyte fuel cell
- 100:: solid electrolyte fuel cell

## Claims

1. A separator for solid electrolyte fuel cell, the separator comprising: a separator main body comprising partially stabilized zirconia; and a protective layer formed on a surface of the body,
wherein the protective layer comprises a material that undergoes no phase transition in a temperature range of 100°C to 300°C, or a material that has a thermal expansion coefficient different from a thermal expansion coefficient of the separator main body within ±1.5 ppm/K or less, and
the material of the protective layer is not altered by water vapor.

2. The separator for solid electrolyte fuel cell according to claim 1, wherein the protective layer comprises at least one selected from the group consisting of:
stabilized zirconia, ceria (CeO₂), ceria doped with a rare earth or yttrium, as well as an insulating ceramic comprising a composite oxide of a material selected from the group consisting of alumina, magnesia, and strontium titanate.

3. The separator for solid electrolyte fuel cell according to claim 1, wherein the protective layer comprises at least one selected from the group consisting of:
lanthanum gallate doped with at least one selected from the group consisting of magnesium, cobalt, and iron, and with an alkaline-earth metal;
strontium titanate doped with at least one selected from the group consisting of niobium and tantalum, and with a rare-earth element;
lanthanum ferrate;
lanthanum ferrate partially substituted with aluminum; and
an insulating ceramic comprising a composite oxide of at least one selected from the group consisting of the four types of materials and at least one selected from the group consisting of alumina, magnesia, and strontium titanate.

4. The separator for solid electrolyte fuel cell according to any one of claims 1 to 3,
wherein the separator main body and the protective layer are co-sintered integrally.

5. A solid electrolyte fuel cell comprising the separator for solid electrolyte fuel cell according to any one of claims 1 to 4,
wherein the solid electrolyte fuel cell is integrated by applying co-sintering to constituent members, and
the protective layer is formed on a surface of the separator main body by the co-sintering.

6. The solid electrolyte fuel cell according to claim 5, wherein the protective layer is at least formed on a principal surface of the separator main body to serve as an outer wall surface of the solid electrolyte fuel cell.
